Europäisches Patentamt

European Patent Office

Office européen des brevets

(19)

(11) Veröffentlichungsnummer : **0 179 775**
**B1**

(12) **EUROPÄISCHE PATENTSCHRIFT**

(45) Veröffentlichungstag der Patentschrift :
07.06.89

(21) Anmeldenummer : 85900974.8

(22) Anmeldetag : 09.02.85

(86) Internationale Anmeldenummer :
PCT/DE 85/00034

(87) Internationale Veröffentlichungsnummer :
WO/8504861 (07.11.85 Gazette 85/24)

(51) Int. Cl.⁴ : **C 04 B 38/10, C 04 B 14/12**

(54) LEICHTKERAMIKMATERIAL FÜR BAUZWECKE, VERFAHREN ZU SEINER HERSTELLUNG SOWIE SEINE VERWENDUNG.

(30) Priorität : 19.04.84 DE 3414967

(43) Veröffentlichungstag der Anmeldung :
07.05.86 Patentblatt 86/19

(45) Bekanntmachung des Hinweises auf die Patenterteilung : 07.06.89 Patentblatt 89/23

(84) Benannte Vertragsstaaten :
AT BE CH DE FR GB LI LU NL SE

(56) Entgegenhaltungen :
DE–C– 583 301
FR–A– 825 108
FR–A– 832 763
FR–A– 2 088 455
FR–A– 2 190 753
US–A– 1 998 686
American Ceramic Society Bulletin, volume 47, March 1968, No. 3, Columbus, Ohio, (US). M.F. Mudde et al.: "Foamed clay-water systems for lightweight aggregate production", pages 264-266, see abstract; page 264, right hand column, lines 2 to 9 and 15,16; page 265, last sentence
Die Akte enthält technische Angaben, die nach dem Eingang der Anmeldung eingereicht wurden und die nicht in dieser Patentschrift enthalten sind.

(73) Patentinhaber : Effem GmbH
Eitzer Landstrasse
D-2810 Verden/Aller (DE)

(72) Erfinder : LANG, Rüdiger
Rodenbeckerstr. 33
D-4950 Minden (DE)
Erfinder : MEYER, Bernd
Distelkampsweg 60a
D-2800 Bremen 33 (DE)

(74) Vertreter : Goddar, Heinz J., Dr. et al
FORRESTER & BOEHMERT Widenmayerstrasse 4/I
D-8000 München 22 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Herstellen eines porösen Leichtkeramikmaterials für Bauzwecke nach dem einleitenden Teil des Patentanspruches 1 und dessen Verwendung.

Leichtbaumaterialien auf Kalk- und Zementbasis sind bereits als sogenannter « Porenbeton » oder « Schaumbeton » bekannt geworden. Dabei werden üblicherweise Mischungen von Calciumoxid, Siliciumdioxid und Wasser unter Zugabe von Schaum, oder aber in aufgeschäumtem Zustand, autoklavgehärtet.

Bekannte poröse Leichtbaumaterialien, wie sie beispielsweise aus der EP-A-0 007 585 bekannt sind, besitzen zwar zufriedenstellende Festigkeits- und sonstige für Bauzwecke wichtige Eigenschaften, wie geringes Gewicht, sind jedoch in der Herstellung für zahlreiche Anwendungszwecke allzu kostenaufwendig. Aus der US-A-4 424 280 ist ein Verfahren der eingangs genannten Art bekannt, bei dem ein Schlicker, bestehend aus Ton, Schäumungsmittel und weiteren Zuschlagstoffen, aufgeschäumt, getrocknet und gebrannt wird, wobei eine Steuerung der Viskosität durch den Zusatz von Methylzellulose erfolgt, jedoch weist das damit herstellbare Material bei Verwendung für Bauzwecke keine in vollem Umfang befriedigenden Produkteigenschaften, insbesondere hinsichtlich Porosität und mechanischer Stabilität, auf.

Aus der FR-A 2 190 753 ist ein Verfahren zum Schäumen einer wässrigen Mischung von Tonmaterialien, Bindemitteln und Tensiden mittels Druckluft im offenen System, also ohne Druck, bekannt, wobei das danach herstellbare Material jedoch keine befriedigenden Produkteigenschaften bezüglich Wärme und/oder Schallisolierung sowie Feuerfestigkeit hat. Bei einem aus der FR-A-2 088 455 bekannten Verfahren, bei dem einer Tonmischung ein bereits vorgefertigtes Schaumgemisch beigemengt wird, lassen sich ebenfalls keine befriedigenden Porositäts-, Dichte- und Festigkeitseigenschaften erzielen.

Der Erfindung liegt daher die Aufgabe zugrunde, das eingangs genannte Verfahren dahingehend weiterzubilden, daß ein poröses Leichtkeramikmaterial hergestellt werden kann, welches sich sowohl als Leichtzuschlagstoff als auch zur Herstellung von Formkörpern, Ziegeln, insbesondere auch für Wärme- und/oder Schallisolierzwecke und für feuerfeste Bauzwecke eignen und mit einfachen Ausgangsmaterialien in preisgünstiger Verfahrensführung zu druckfesten, leichten Formkörpern führen soll, wobei die danach hergestellten Produkte verbesserte Porositäts- und mechanische Eigenschaften aufweisen sollen.

Erfindungsgemäß wird diese Aufgabe durch die im kennzeichnenden Teil des Patentanspruches 1 aufgeführten Merkmale gelöst. Besonders bevorzugte Ausführungsformen des Verfahrens nach der Erfindung sind Gegenstand der auf den Patentanspruch 1 zurückbezogenen Unteransprüche. Schließlich betrifft die Erfindung auch die Verwendung des nach dem erfindungsgemäßen Verfahren hergestellten Materials in massiver und/oder Granulatform als wärme- und/oder schallisolierender Werkstoff für Bauzwecke, aber auch als Zuschlagstoff für Hochtemperatur-Baustoffe, wie Ofenbaustoffe, feuerfeste Baustoffe oder dergleichen.

Falls aus fertigungstechnischen Gründen ein Produkt mit besonders hohen Rohfestigkeiten gewünscht wird, wie dies insbesondere bei Produktionseinheiten, die die Abmessungen von Ziegelsteingrößen überschreiten, der Fall sein kann, ist es besonders vorteilhaft, ein hydraulisches Bindemittel, wie Zement, zuzusetzen. Als Ton lassen sich einfacher Ziegelton und Mergel, jedoch auch Westerwälder Steinzeugton, Feinsteinzeugton, Kaolin, Montmorillonit oder Betonit verwenden. Es ist besonders wirtschaftlich, daß bei dem Verfahren nach der Erfindung nach dem Trocknen nicht zufriedenstellende Formkörper bzw. — bei Granualtherstellung — anfallende Tonschaumgranulatfeinanteile, die bei Siebverfahren ausgeschieden werden, ohne weitere Behandlung direkt in die Ausgangsmischung zurückgeführt werden können, da sie lediglich getrocknet und nicht gebrannt sind und somit noch völlig reaktionsfähig vorliegen.

Üblicherweise verläuft das erfindungsgemäße Verfahren derart, daß Ton mit Wasser und Verflüssigungsmittel unter Tensidzugabe zu einer wasserarmen, thixotropen Suspension angerührt wird. Anschließend erfolgt dann die Aufschäumung in einer Dispergieranlage unter Zugabe von Pressluft. Dabei können herkömmliche Dispergieranlagen, wie sie beispielsweise unter der Handelsbezeichnung « Hansa-Mixer » durch die Firma Hansawerke Lürman, Schütte & Co., Bremen, vertrieben werden, eingesetzt werden, welche unter Druck (1 bis 10 bar) definierte Mengen Druckluft zusetzen. Die Dispergieranlage weist dabei eine weitere Feindosierpumpe auf, mittels welcher Flüssigkeit vor und gegebenenfalls während des Schäumvorganges zugegeben werden kann. Vorteilhafterweise wird bei der Durchführung des erfindungsgemäßen Verfahrens eine der Verflüssigungswirkung des Verflüssigungsmittels entgegenwirkende Substanz eingesetzt, beispielsweise verdünnte Salzsäure, wodurch es möglich wird, hochviskose, thixotrope, eigenstabile Schaum-Suspensionen herzustellen.

Die eigenstabile, thixotrope Schaum-Suspension wird sodann getrocknet, wobei der Wasserdampf aufgrund der hohen Eigenporosität des Materials ungehindert durch die Poren austreten kann. Dabei ist es insbesondere förderlich, wenn die Ausgangsmaterialmischung einen relativ geringen Wassergehalt aufweist. Üblicherweise wird das getrocknete Material in Strängen von etwa 1 cm Durchmesser vorgelegt, wobei bei Temperaturen von 200 °C beispielsweise mit Trockenzeiten von nicht mehr als 5 Minuten gearbeitet werden kann. Dieses getrocknete Material wird vor dem Brennen zu Granulat zerkleinert.

Bedingt durch die Porosität des Materials, ist vor allem beim Brennen von Körpern mit kleinen Abmessungen ebenfalls ein sehr günstiges Arbeiten, ähnlich wie beim Trocknen, möglich. Bei 1400 °C Ofentemperatur, einer Materialtemperatur zwischen 800 und 1200 °C entsprechend, können innerhalb von weniger als 5 Minuten Brennzeit, eingeschlossen Auf- und Abheizzeiten, Leichtkeramikmaterialien für Bauzwecke hergestellt werden. Eine Behandlung bei höherer Temperatur ist für die erfindungsgemäße Verwendung des Materials für Bauzwecke besonders erwünscht, da dabei besonders günstige Festigkeitseigenschaften erhalten werden können.

Natürlich wird die Menge der übrigen Zuschlagsstoffe, beispielsweise bei der Herstellung von feuerfesten Baustoffen, in zweckentsprechender Weise eingestellt, also Zusatz von Tonerde, Magnesit, Quarz und dergleichen, wie es die jeweiligen Anwendungszwecke in diesem Fall erfordern.

Der Erfindung liegt die überraschende Erkenntnis zugrunde, daß es gelingt, ein Produkt mit gegenüber dem Stand der Technik wesentlich verbesserten Eigenschaften der weiter oben angebenen Art herzustellen, indem im geschlossenen System unter Druck mittels definierter Druckluftzufuhr geschäumt wird, woraus sich die wünschenswerten Porositäts- und mechanischen Eigenschaften ergeben.

Ein ähnliches Verfahren wie dasjenige nach der Erfindung, gerichtet auf die Herstellung eines porösen Ad- bzw. Absorptionsmaterials, ist Gegenstand der EP-B-0 182 793 gleichen Zeitrangs.

Nachstehend ist die Erfindung anhand eines Ausführungsbeispiels und unter Bezugnahme auf die schematische Zeichnung im einzelnen erläutert.

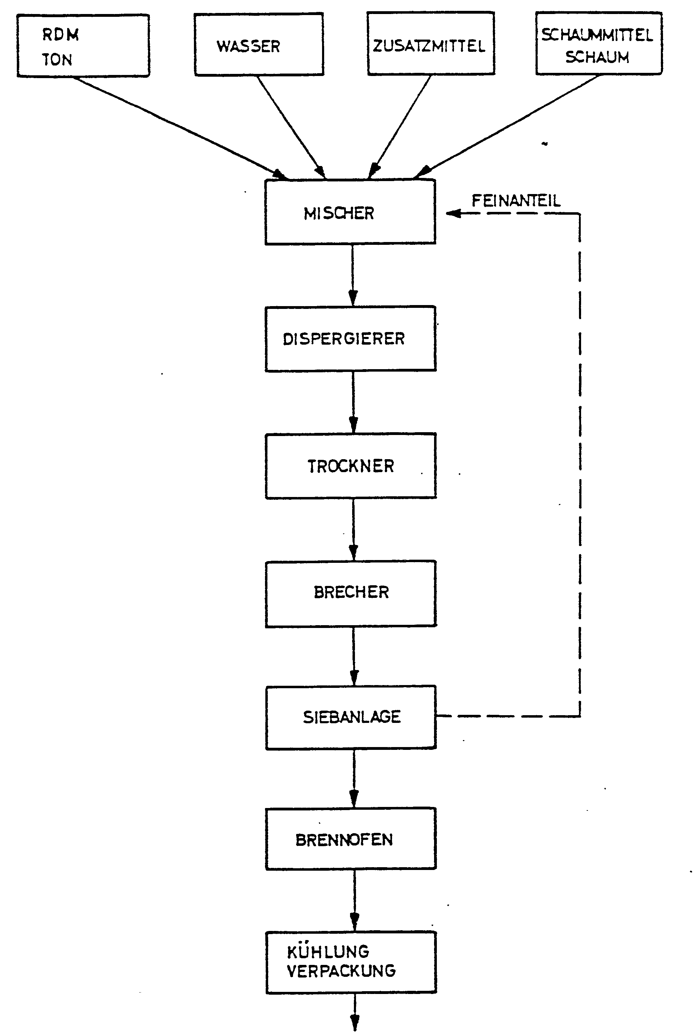

Die aus einer einzigen Figur bestehende Zeichnung zeigt dabei ein Flußdiagramm der Verfahrensführung nach der Erfindung.

Beispiel

500 kg Mergel und 400 kg zerkleinerter, getrockneter Schaumton, hergestellt durch Zerkleinern verworfener, getrockneter, noch nicht gebrannter Schaumtonformlinge, 200 l Wasser sowie 120 g Natriumpolyphosphat und 100 g Natriumdodecylsulfonat wurden in einem Dispergierer, wie er durch die Firma Hansawerke, Bremen, hergestellt wird, bei 3 bar unter Druck mit Preßluft aufgeschäumt. Das geschäumte Produkt wurde in Plattenformen gegossen, in einen Trockenofen gefahren und bei 200 °C 10 Minuten getrocknet. Die getrockneten Schaumtonformlinge wurden aus den Formen genommen und in üblicher Art und Weise in einem herkömmlichen Brennofen bei einer Temperatur von etwa 1000 °C (Produkttemperatur; die Ofentemperatur betrug etwa 1400 °C) 7 Minuten gebrannt. Es wurden gelbbraune Leichtkeramikplatten erhalten, welche folgende Kenndaten hatten:

pH-Wert: 7-8

Porendurchmesser: < 1 mm
Rohdichte ca. 0,6 g/cm³

Die Vorteile des derart hergestellten Produktes bestehen in hoher Wärmedämmwirkung, Schalldämmwirkung und geringer Hygroskopizität. Derartige Platten oder Formsteine können als Ersatz für Glasfaserwolle, Asbestfasern oder Steinwolle oder Hartschaumstoff auf Polystyrolbasis zur thermischen Isolierung als Dämmaterial, aber auch als Vekleidungsplatten sowie für Leichttrennwände eingesetzt werden, wenn geringes Raumgewicht aufgrund ungenügender Belastbarkeit des Untergrundes notwendig ist.

Durch die Zugabe von hydraulischen Bindern, wie Zement, können noch weiter verbesserte Festigkeitswerte ohne Einbuße der günstigen Eigenschaften, nämlich leichtes Gewicht und preiswerte Herstellung, erzielt werden.

Als Verflüssigungsmittel können beim erfindungsgemäßen Verfahren beispielsweise Wasserglas, Calciumpolyphosphat, Natriumpolyphosphat, Phosporsäure, Chloride oder Sulfate eingesetzt werden. Als hydraulisches Bindemittel kann zur Erzielung einer höheren Rohfestigkeit vorzugsweise Zement zugesetzt werden. Bei der Herstellung von Leichtzuschlagsstoffen, wie sie im Baubereich beispielsweise bei Betonen und ähnlichem eingesetzt werden, sind Granulate zweckmäßig, die nach dem erfindungsgemäßen Verfahren dadurch gewonnen werden können, daß die getrockneten Formkörper durch einen Brecher zu einer Siebanlage geführt werden, welche einen bevorzugten Korngrößenbereich zurückbehält und Feinanteile verwirft, die sodann wieder zum Mischer rückgeführt werden können, wie dies aus der Zeichnung ersichtlich ist.

Patentansprüche

1. Verfahren zum Herstellen eines porösen Leichtkeramikmaterials für Bauzwecke, insbesondere für Ziegel, Platten oder als Zuschlagmittel für Leichbaumaterialien, mit einer Porosität von 50 bis 300 %, einem pH-Wert im Bereich von 5 bis 9, und einer Rohdichte von 300 bis 700 g/l, bei dem eine Mischung aus Ton(en) ggf. Zuschlagsstoff(en), anionischem(n) oder kationischem(n) Tensid(en), Verflüssigungsmittel(n) und ggf. einem hydraulischen Binder, wie Zement, zu Formkörpern geformt, getrocknet und bei Temperaturen oberhalb von 600 °C gebrannt wird, dadurch gekennzeichnet, daß 45 bis 80 Gew.-Teile Ton, Kalkspat, Quarzsand, Dolomit, Feldspat, Schamotte und/oder organische Materialien, wie Sägemehl oder Kohle, 15 bis 30 Gew.-Teile Wasser, 0,01 bis 0,03 Gew.-Teile Verflüssigungsmittel und 0,001 bis 0,1 Gew.-Teile Tensid(e) gemischt und in einer Dispergieranlage unter Druck (1 bis 10 bar) durch Druckluftzufuhr aufgeschäumt werden, daß die aus der geschäumten Mischung geformten Tonformkörper bei einer Temperatur zwischen Raumtemperatur und 200 °C getrocknet werden, und daß die getrockneten Tonformkörper zerkleinert und unter Rückführen des Feinanteils zur Ausgangsmischung gesiebt und bei einer Produkttemperatur im Tonformkörper zwischen 600 und 1000 °C gebrannt werden.

2. Verfahren nach Anspruch 1, dadurch gekennzeichnet, daß für die Herstellung der Ausgangsmischung 60 bis 75 Gew.-Teile Ton, 15 bis 20 Gew.-Teile Wasser sowie 10 bis 20 Gew.-Teile Zuschlagstoff(e) verwendet werden.

3. Verfahren nach Anspruch 1 oder 2, dadurch gekennzeichnet, daß das Aufschäumen der Mischung bei einer Temperatur zwischen Raumtemperatur und 95 °C erfolgt.

4. Verfahren nach einem der vorangehenden Ansprüche, dadurch gekennzeichnet, daß vor oder während des Aufschäumens der Mischung dem(n) Verflüssigungsmittel(n) entgegenwirkende Mittel eingesetzt werden, um eine hochviskose, thixotrope, eigenstabile Schaumsuspension herzustellen.

5. Verfahren nach einem der vorangehenden Ansprüche, dadurch gekennzeichnet, daß die Tonformkörper in weniger als 5 Min. bei einer Ofentemperatur von 1000-1400 °C, entsprechend einer Produkttemperatur zwischen 800 und 1000 °C, gebrannt werden.

6. Verwendung des nach dem Verfahren nach einem der Ansprüche 1 bis 5 hergestellten Leichtkeramikmaterials in massiver und/oder Granulatform als wärme- und/oder schallisolierender Werkstoff für Bauzwecke.

7. Verwendung des nach dem Verfahren nach einem der Ansprüche 1 bis 5 hergestellten Leichtkeramikmaterials in massiver und/oder Granulatform als Zuschlagstoff für Hochtemperatur-Baustoffe, wie Ofenbaustoffe oder feuerfeste Baustoffe.

## Claims

1. Process for producing a porous lightweight ceramic material for building purposes, in particular for bricks, panels or as additives for lightweight building materials, having a porosity from 50 to 300%, a pH value in the range from 5 to 9 and an apparent density from 300 to 700 g/l, wherein a mixture of clay(s), if appropriate additive(s), anionic or cationic surfactant(s), dissolving agent(s) and if appropriate a hydraulic binder, such as cement, is formed into mouldings, which are dried and burned at temperatures above 600 °C, characterized in that 45 to 80 parts by weight of clay, calcite, quartz sand, dolomite, felspar, fireclay and/or organic materials such as sawdust or coal, 15 to 30 parts by weight of water, 0.01 to 0.03 part by weight of dissolving agent and 0.001 to 0.1 part by weight of surfactant(s) are mixed and foamed in a dispersing unit under pressure (1 to 10 bar) by means of feeding compressed air, that the clay mouldings formed from the foamed mixture are dried at a temperature between room temperature and 200 °C, and that the dried clay mouldings are comminuted and screened, with recycle of the fines to the starting mixture, and burned at a product temperature in the clay moulding of between 600 and 1 000 °C.

2. Process according to claim 1, characterized in that 60 to 75 parts by weight of clay, 15 to 20 parts by weight of water and 10 to 20 parts by weight of additive(s) are used for preparing the starting mixture.

3. Process according to Claim 1 or 2, characterized in that the foaming of the mixture is carried out at a temperature between room temperature and 95 °C.

4. Process according to one of the preceding claims, characterized in that, before or during the foaming of the mixture, agents which counteract the dissolving agent(s) are employed in order to produce a highly viscous, thixotropic, inherently stable foam suspension.

5. Process according to one of the preceding claims, characterized in that the clay mouldings are burned in less than 5 minutes at a kiln temperature of 1000-1400 °C, corresponding to a product temperature between 800 and 1000 °C.

6. Use of the lightweight ceramic material produced by the process according to one of claims 1 to 5 in a solid form and/or granular form as a heat-insulating and/or sound-insulating material for building purposes.

7. Use of the lightweight ceramic material produced by the process according to one of Claims 1 to 5 in a solid form and/or granular form as an additive for high-temperature building materials, such as furnace building materials, or refractory building materials.

## Revendications

1. Procédé pour fabriquer un matériau poreux en céramique légère dans des buts de construction, en particulier pour des briques ou tuiles, des panneaux ou comme agrégat pour des matériaux de construction légers, avec une porosité de 50 à 300 %, une valeur de pH dans la zone de 5 à 9, et une masse volumique apparente de 300 à 700 g/l, dans lequel un mélange d'argile(s) éventuellement d'agrégat(s), de dérivé(s) tensio-actif(s) anionique(s) ou cationique(s), de fluidifiant(s) et éventuellement d'un liant hydraulique, comme du ciment, est formé en corps de formes, séché et cuit à des températures supérieures à 600 °C, caractérisé en ce que 45 à 80 parties en poids d'argile, de calcite, de sable silicieux, de dolomite, de feldspath, de chamotte et/ou de matières organiques, comme de la sciure de bois ou du charbon, 15 à 30 parties en poids d'eau, 0,01 à 0,03 parties en poids de fluidifiant et 0,001 à 0,1 parties en poids de dérivé(s) tensio-actif(s) sont mélangés et transformés en mousse dans une installation de dispersion sous pression (1 à 10 bar) par amenée d'air comprimé, en ce que les corps de forme en argile formés à partir du mélange transformé en mousse sont séchés à une température comprise entre la température ambiante et 200 °C, et en ce que les corps de forme en argile séchés sont broyés et tamisés en retournant les fines au mélange initial, et cuits à une température de produit de 600 à 1000 °C dans le corps de forme en argile.

2. Procédé selon la revendication 1, caractérisé en ce que sont employés pour la fabrication du mélange initial 60 à 75 parties en poids d'argile, 15 à 20 parties en poids d'eau ainsi que 10 à 20 parties en poids d'agrégat(s).

3. Procédé selon la revendication 1 ou 2, caractérisé en ce que la transformation en mousse du mélange se produit à une température comprise entre température ambiante et 95 °C.

4. Procédé selon l'une des revendications précédentes, caractérisé en ce qu'avant ou pendant la transformation en mousse du mélange sont introduits des agents agissant en sens inverse du(des) fluidifiant(s) pour obtenir une suspension de mousse de haute viscosité, thixotrope, stable par elle-même.

5. Procédé selon l'une des revendications précédentes, caractérisé en ce que les corps de forme en argile sont cuits en moins de 5 minutes à une température de four de 1000 à 1400 °C, correspondant à une température de 800 à 1000 °C dans le produit.

6. Emploi du matériau céramique léger fabriqué selon l'une des revendications 1 à 5 sous forme massive ou en granulat comme matériau isolant thermique ou sonique dans des buts de construction.

7. Emploi du matériau céramique léger fabriqué selon l'une des revendications 1 à 5 sous forme massive ou en granulat comme agrégat pour des matériaux de construction à haute température, comme des matériaux de construction de fours ou des matériaux de construction réfractaires.

| RDM TON | WASSER | ZUSATZMITTEL | SCHAUMMITTEL SCHAUM |
|---------|--------|--------------|---------------------|

MISCHER

FEINANTEIL

DISPERGIERER

TROCKNER

BRECHER

SIEBANLAGE

BRENNOFEN

KÜHLUNG VERPACKUNG

1